# EUROPEAN PATENT SPECIFICATION

(11) **EP 4 345 349 B1**
(45) Date of publication and mention of the grant of the patent: **11.06.2025**
(21) Application number: 22461611.0
(22) Date of filing: 28.09.2022
(51) Int. Cl.: F16K 27/00, F16K 49/00, B33Y 10/00, B33Y 80/00

(54) **A VALVE HEATING ARRANGEMENT**
VENTILHEIZANORDNUNG
AGENCEMENT DE CHAUFFAGE DE SOUPAPE

(43) Date of publication of application: 03.04.2024
(73) Proprietor: Goodrich Corporation, Charlotte, NC 28217 (US)
(72) Inventor: KROCZEK, Piotr, 51-317 Wroclaw (PL); TUREK, Lukasz, 51-317 Wroclaw (PL); SAPIJA, Dariusz, 51-317 Wroclaw (PL)
(74) Representative: Dehns

(56) References cited:
- US-B2- 9 851 020

## Description

### TECHNICAL FIELD

The present disclosure is concerned with providing heating for valves and valve components e.g. to prevent freezing.

### BACKGROUND

Valves of many types are known to regulate the flow of fluid through a system. Such valves can be manual or motorized. Mechanical, hydraulic and electrical valves are known and used in many fields. Often, such valves and associated pipes are required to operate in extreme environments and are required to be able to continue to operate reliably in environments where e.g. contamination, vibration, pressure and or temperatures can impact operation. One field of application where the valve components are subjected to particularly low temperatures is in the aerospace field. Valves are used to drain fluid from water systems in the aircraft or to drain water that has accumulated in parts of the aircraft such as the fuel tank. Hydraulic valves are also used to control moveable parts of the aircraft such as flight control panels. Components such as water pipes and valves designed for aerospace applications often face many unique challenges. One of the main challenges is high altitude operation with ambient temperatures around -45°C (-50°F). At such temperatures, water in or around the valve parts can freeze and prevent reliable operation of the valve. For this reason, many valves require some form of heating to prevent water in or on the valve from freezing.

Typically, silicone heaters are used since these can be formed as flexible sheets or sleeves and fitted around the parts of the valve that require heating.

Although silicone heaters provide an effective and simple solution, silicone has fairly low mechanical properties and so can be damaged during installation or during normal use of the valve and may need to be replaced frequently. Further, the known silicone heaters are provided as a layer around the valve/pipes. This results in an overall increase of the size of the valve/pipes and therefore requires more space for installation. In aircraft, and other applications where space is limited, this can be disadvantageous. An alternative valve heater arrangement having a valve body formed by additive manufacture is disclosed in US 9,851,020 B2.

There is, therefore, a need for a simple way of providing heating to valves that avoids these problems.

### SUMMARY

According to this disclosure, there is provided a valve body as defined by claim 1. A method of manufacture is also provided as defined by claim 8.

### BRIEF DESCRIPTION

Examples of the valve heating arrangement of the disclosure will be described below with reference to the drawings. It should be noted that variations are possible within the scope of the claims.

The arrangement will be described with particular reference to valves used in aerospace, but the inventive concept can be equally applied to valves used in other applications where heating is required and the scope of the invention is not limited to any particular application or type of valve.
Figure 1 shows an example of a typical valve provided with a known silicone heater.
Figure 2 shows an example of a heater according to this disclosure.
Figure 3 shows an example of a heater according to the disclosure incorporated into a valve body.
Figure 4 shows a bottom view of the example of Figure 3.
Figure 5 shows further details of the example of Figure 3 during manufacture.
Figure 6 shows a side view of the example in Figure 5 at a stage of forming the heater.
Figure 7 shows the view of Figure 6 at a subsequent stage of forming the heater.
Figure 8 shows the view of Figure 7 at a subsequent stage of forming the heater.
Figure 9 shows the view of Figure 8 at a subsequent stage of forming the heater.
Figure 10 shows and example of a wire that may be used for the heater according to the disclosure.

### DETAILED DESCRIPTION

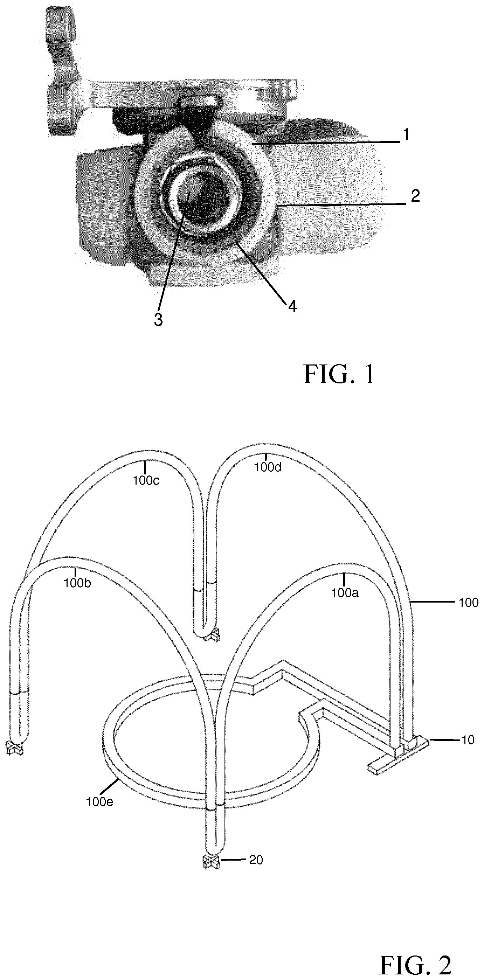

With reference to Fig. 1, a conventional valve heating arrangement will be described by way of background.

A typical valve comprises a valve body 1 having a number of ports 2 and defining a fluid flow passage 3 therethrough between the ports. The valve regulates the flow of fluid in different ways depending on the type of valve, but essentially a valve component e.g. a ball, moves relative to the valve body to open and close the fluid flow passage as required. The present invention is not limited to any particular type of valve.

In the conventional arrangement, where the valve is at risk of freezing at low temperatures, silicone heater elements 4 are wrapped around the outside of the valve parts.

As can be seen, this adds to the overall dimensions of the valve and, further, the heater elements may be vulnerable to damage.

In recent times, additive manufacturing (or 3D printing) processes have been developed and improved to an extent that more and more components can be made in this way. Using additive manufacturing enables more flexibility in the sizes and more complexity in the shapes of components that can be manufactured. Desired shapes and sizes can be manufactured quickly and on an 'as needed' basis thus also reducing storage requirements. Additive manufacturing is now becoming a more common way of manufacturing valve bodies and valve parts. The solution provided by the present invention takes advantage of this development.

The heating arrangement of this invention involves using a heating wire that is located within the valve body during formation of the valve body by additive manufacturing, as will be described in more detail below.

Rather than using sheets or sleeves of silicone provided on the outside of the valve body, the present invention uses a thermally conductive wire that is located within a channel formed in the valve body during additive manufacture.

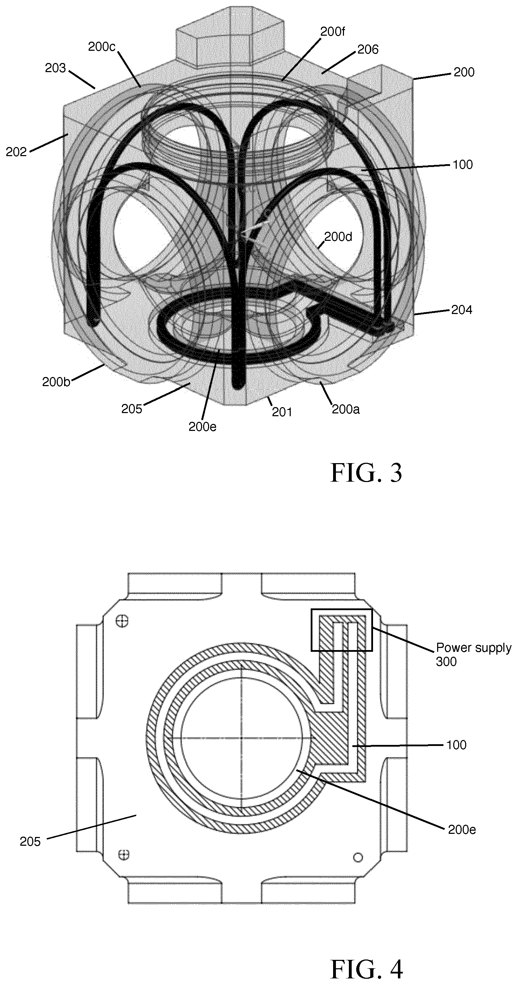

The heating wire can be sized, shaped and arranged in any manner according to the size and shape of the valve body and the locations where heating is required. An example of a heating wire 100 structure is shown in Fig. 2. This example would be suitable for an essentially cuboid valve body having a port in each of the four side walls and a fluid flow passage from a port in the bottom wall to a port in the top wall (see Fig. 3). In the example shown, the conductive wire 100 forms a loop to fit around the valve body defining a heating wire arch 100a, 100b, 100c, 100d around each of the ports in the side walls of the valve body and a heating wire loop 100e around the port in the bottom wall. Fig. 2 also shows support members 10, 20 used to locate the heater wire during manufacture as described further below. The wire may be shaped and arranged differently for different valve bodies or different heating requirements.

Fig. 3 shows the heating wire 100 located within the valve body 200. The valve body having a port 200a, 200b, 200c, 200d in each of its side walls 201, 202, 203, 204, as well as a port 200e in the bottom wall 205 and a port 200f in the top wall 206.The wire provides heating to the valve body 200 by application of electricity to the wire from outside the valve body.

Figure 4 shows an example in which electric power 300 is provided to the wire 100 where it starts and ends in the bottom wall but power could be provided to heat the wire from other locations. Other valve bodies may have different shapes and/or different numbers of ports. The heating wire may provide heating at each port or only at some ports.

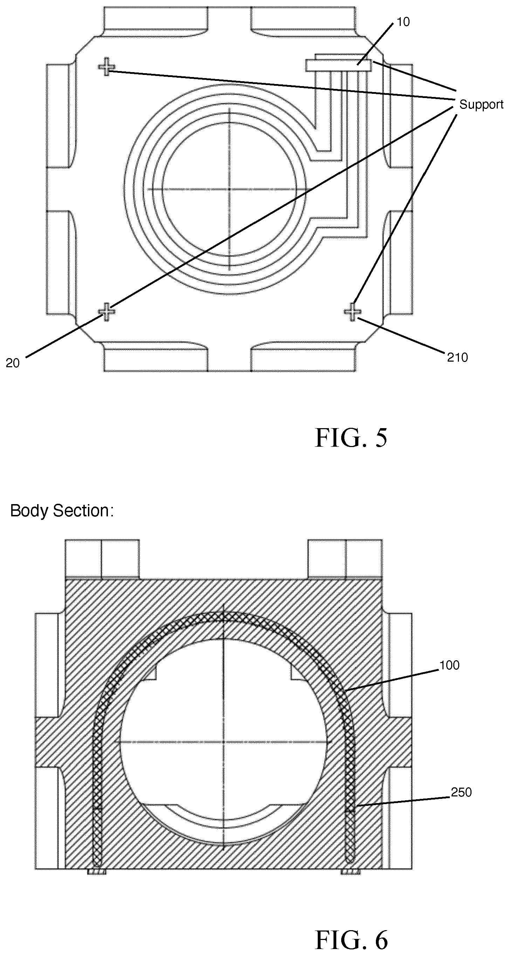

The manner in which the heating arrangement is formed will now be described in more detail, by way of example only, with reference to Figs. 5 to 9.

The valve body and the heating wire are printed in a single additive manufacturing, AM, process to provide a single part. The valve body 200 is formed, using AM, in the desired shape and size and with the desired port and fluid flow passage configuration and, during the printing or building up of the valve body, a channel or recess is formed within the valve body defining the location where the heating wire is to be positioned. In the example shown, this involves defining a channel or recess 250 around each of the valve body ports. Fig. 5 shows an example of the bottom wall and Fig. 6 shows an example of a side wall.

The heating wire 100 is then located in the printed channel/recess 250 as seen in e.g. Figs. 5 and 6. To ensure the wire is properly located and remains in place during the rest of the formation process, preferably support elements 10, 20 are provided at various locations along the wire. These may be in the form of shaped support blocks or fasteners that engage with the heating wire and with the valve body to hold the wire in place relative to the valve body. Holes 210 may be provided in the valve body where parts of the heating wire 100 are anchored by the support elements tat protrude through the holes. In the example shown, the support members are provided at locations at the bottom of each arch formed around a port. In the example, the supports at the legs of the arches are X-shaped. An additional support 10 is provided where the heating wire starts and finishes - which, in this example, is at the bottom wall of the valve body and, in this example, is a rectangular support plate.

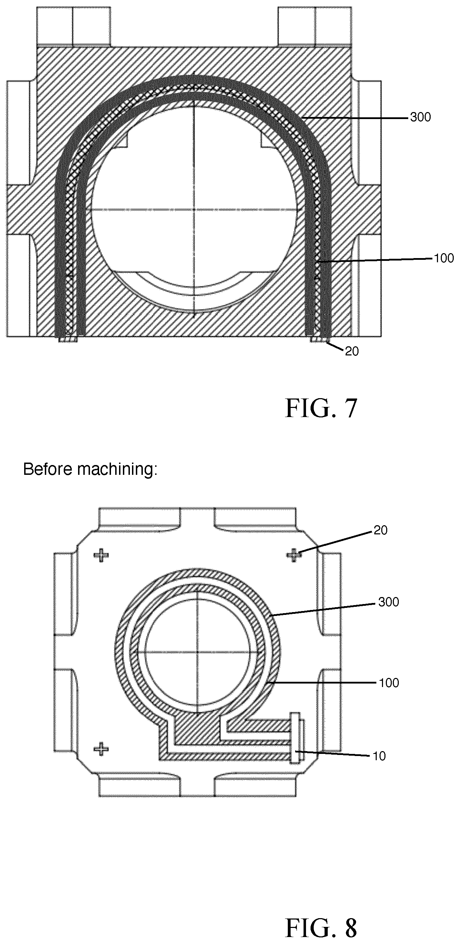

Once the wire has been positioned in the valve body as desired, and is temporarily held in place by the supports (in preferred examples), a filler material 300 is provided around the heating wire 100 in the channel/recess, as shown in Fig. 7, to secure the wire and to fill any gap between the wire and the channel. The filler material should be thermally conductive e.g. a thermally conductive epoxy resin. The filler material 300 may also be electrically insulative to prevent electrical charge passing to the valve body. Fig. 8 shows the bottom side of the valve body after the filling step.

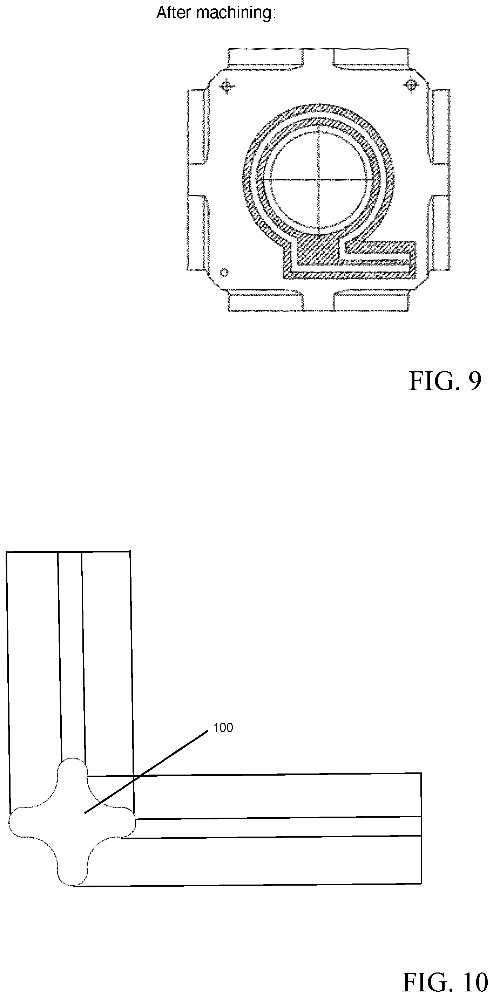

Once the heating wire 100 is secured in place in the channel 250 by the filler material 300, the supports can be machined away as seen in Fig. 9 to remove any protrusions from the valve body and leave a relative smooth finish. Removing the support elements (if they were used) means that there is no mechanical connection between the valve body and the heating wire and the filler material 300 provides electrical isolation between the wire and the valve body. The heating wire is fully protected from the external environment.

As mentioned above, the shape and dimensions of the wire can be varied according to heating requirements. The wire ma be a simple circular cross-section wire. Alternatively, the wire may have a non-circular cross-section e.g. an X-shaped cross-section, as shown in Fig. 10, or splined, dimpled or other irregular cross-section. Cross-sections such as that shown in Fig. 10 or with other irregularities provide an increased external surface area of wire compared to a circular cross-section thus allowing for more heat transfer.

By providing heating to a valve by incorporating a heating wire into an additively manufactured valve body, the heating element is fully provided within the envelope of the valve body thus not adding to the overall size of the valve and also not leaving the heating elements exposed and subject to external environment damage such as mechanical loads and chemical damage. Also, because the heating wire is formed with the valve body during additive manufacture, the desired shape of heating wire can be formed easily and quickly according to the specific requirements of the valve being manufactured. There is, therefore, flexibility, during manufacture, to adapt to different temperature and other product requirements.

## Claims

1. A valve body formed by additive manufacture and having a plurality of ports and a thermally conductive heating wire (100) embedded in the valve body to which electric power is applied to cause the thermally conductive heating wire to generate heat in the valve body (200), wherein a channel (250) is defined within the valve body around one or more of the plurality of ports during additive manufacture of the valve body, the heating wire (100) located within the channel (250).

2. The valve body of claim 1, further comprising a filler material (300) around the heating wire within the valve body.

3. The valve body of claim 2, wherein the filler material is a thermally conductive filler material.

4. The valve body of claim 3, wherein the filler material is epoxy resin.

5. The valve body of any of claims 2 to 4, wherein the filler material is electrically insulative.

6. The valve body of any preceding claim, wherein the heating wire (100) has a non-circular cross-section.

7. The valve body of claim 6, wherein the heating wire has a splined cross-section and preferably wherein the heating wire has an X-shaped cross-section.

8. A method of forming a valve body, the method comprising forming a valve body structure having a plurality of ports using additive manufacturing; defining a channel (250) within the valve body around one or more of the plurality of ports during the additive manufacturing; locating a thermally conductive heating wire in the channel during the additive manufacturing such that electric power can be applied to the heating wire to generate heat in the valve body.

9. The method of claim 8, further comprising securing the heating wire in position in the channel relative to the valve body by support elements (10, 20).

10. The method of claim 8 or 9, further comprising providing a filler material (300) around the heating wire in the channel (250) to secure the heating wire in the channel.

11. The method of claim 9 or 10 when dependent on claim 9, further comprising machining the support elements (10, 20) away after the additive manufacturing.

## Patentansprüche

1. Durch additive Fertigung ausgebildeter Ventilkörper, der eine Vielzahl von Anschlüssen und einen in den Ventilkörper eingebetteten wärmeleitenden Heizdraht (100) aufweist, an den elektrischer Strom angelegt wird, um den wärmeleitenden Heizdraht zum Erzeugen von Wärme in dem Ventilkörper (200) zu veranlassen, wobei während der additiven Fertigung des Ventilkörpers ein Kanal (250) innerhalb des Ventilkörpers um einen oder mehrere der Vielzahl von Anschlüssen herum definiert wird, wobei sich der Heizdraht (100) innerhalb des Kanals (250) befindet.

2. Ventilkörper nach Anspruch 1, ferner umfassend ein Füllmaterial (300) um den Heizdraht innerhalb des Ventilkörpers.

3. Ventilkörper nach Anspruch 2, wobei das Füllmaterial ein wärmeleitendes Füllmaterial ist.

4. Ventilkörper nach Anspruch 3, wobei das Füllmaterial Epoxidharz ist.

5. Ventilkörper nach einem der Ansprüche 2 bis 4, wobei das Füllmaterial elektrisch isolierend ist.

6. Ventilkörper nach einem der vorhergehenden Ansprüche, wobei der Heizdraht (100) einen nicht kreisförmigen Querschnitt aufweist.

7. Ventilkörper nach Anspruch 6, wobei der Heizdraht einen keilförmigen Querschnitt aufweist und wobei der Heizdraht vorzugsweise einen X-förmigen Querschnitt aufweist.

8. Verfahren zum Ausbilden eines Ventilkörpers, wobei das Verfahren Ausbilden einer Ventilkörperkonstruktion, die eine Vielzahl von Anschlüssen umfasst, unter Verwendung von additiver Fertigung; Definieren eines Kanals (250) innerhalb des Ventilkörpers um einen oder mehrere der Vielzahl von Anschlüssen herum während der additiven Fertigung; Anordnen eines wärmeleitenden Heizdrahts in dem Kanal während der additiven Fertigung derart, dass zum Erzeugen von Wärme in dem Ventilkörper elektrischer Strom an den Heizdraht angelegt werden kann, umfasst.

9. Verfahren nach Anspruch 8, ferner umfassend Sichern des Heizdrahtes in einer Position in dem Kanal relativ zu dem Ventilkörper durch Stützelemente (10, 20).

10. Verfahren nach Anspruch 8 oder 9, ferner umfassend Bereitstellen eines Füllmaterials (300) um den Heizdraht in dem Kanal (250) herum, um den Heizdraht in dem Kanal zu sichern.

11. Verfahren nach Anspruch 9 oder 10, sofern abhängig von Anspruch 9, ferner umfassend spanendes Entfernen der Stützelemente (10, 20) nach der additiven Fertigung.

## Revendications

1. Corps de vanne formé par fabrication additive et présentant une pluralité d'orifices et un fil chauffant thermoconducteur (100) intégré dans le corps de vanne auquel une puissance électrique est appliquée pour amener le fil chauffant thermoconducteur à générer de la chaleur dans le corps de vanne (200), dans lequel un canal (250) est défini à l'intérieur du corps de vanne autour de l'un ou plusieurs de la pluralité d'orifices pendant la fabrication additive du corps de vanne, le fil chauffant (100) étant situé à l'intérieur du canal (250).

2. Corps de vanne selon la revendication 1, comprenant également un matériau de remplissage (300) autour du fil chauffant à l'intérieur du corps de vanne.

3. Corps de vanne selon la revendication 2, dans lequel le matériau de remplissage est un matériau de remplissage thermoconducteur.

4. Corps de vanne selon la revendication 3, dans lequel le matériau de remplissage est une résine époxy.

5. Corps de vanne selon l'une quelconque des revendications 2 à 4, dans lequel le matériau de remplissage est électriquement isolant.

6. Corps de vanne selon l'une quelconque des revendications précédentes, dans lequel le fil chauffant (100) a une section transversale non circulaire.

7. Corps de vanne selon la revendication 6, dans lequel le fil chauffant a une section transversale cannelée et de préférence dans lequel le fil chauffant a une section transversale en forme de X.

8. Procédé de formation d'un corps de vanne, le procédé comprenant la formation d'une structure de corps de vanne présentant une pluralité d'orifices en utilisant la préparation additive ; la définition d'un canal (250) à l'intérieur du corps de vanne autour de l'un ou plusieurs de la pluralité d'orifices pendant la préparation additive ; le positionnement d'un fil chauffant thermoconducteur dans le canal pendant la préparation additive de telle sorte que de l'énergie électrique puisse être appliquée au fil chauffant pour générer de la chaleur dans le corps de vanne.

9. Procédé selon la revendication 8, comprenant également la fixation du fil chauffant en position dans le canal par rapport au corps de vanne par des éléments de support (10, 20).

10. Procédé selon la revendication 8 ou 9, comprenant également la fourniture d'un matériau de remplissage (300) autour du fil chauffant dans le canal (250) pour fixer le fil chauffant dans le canal.

11. Procédé selon la revendication 9 ou 10 lorsqu'il dépend de la revendication 9, comprenant également l'usinage des éléments de support (10, 20) après la préparation additive.
